# EUROPÄISCHE PATENTANMELDUNG

(11) **EP 4 163 053 A1**
(43) Veröffentlichungstag der Anmeldung: **12.04.2023**
(21) Anmeldenummer: 21201303.1
(22) Anmeldetag: 06.10.2021
(51) Int. Cl.: B23Q 1/01, B23Q 7/04, B23Q 11/00

(54) **FLEXIBLE FERTIGUNGSZELLE**

(71) Anmelder: WFL Millturn Technologies GmbH & Co. KG, 4030 Linz (AT)
(72) Erfinder:
(74) Vertreter: Jell, Friedrich

(57) **Zusammenfassung**

Es wird eine flexible Fertigungszelle (1) mit einem Bearbeitungszentrum (2), mit einem Werkstückmagazin (3) und mit einem Werkstückmanipulator (4) gezeigt. Um kompakte Bauverhältnisse bei Gewährleistung einer Kollisionsfreiheit ermöglichen zu können, wird vorgeschlagen, dass der Tragarm (14) am Gestellrahmen (11) des Werkstückmagazins (3) befestigt ist und im Bearbeitungszentrum (2) frei auskragend verläuft.

## Beschreibung

Die Erfindung betrifft eine flexible Fertigungszelle mit einem Bearbeitungszentrum, das einen Arbeitsraum zur Bearbeitung eines Werkstücks und eine Spanneinrichtung zum Spannen des Werkstücks aufweist, mit einem zur Aufnahme mehrerer Werkstücke ausgebildeten Werkstückmagazin, das einen Gestellrahmen aufweist, und mit einem zum Be- und/oder Entladen der Spanneinrichtung mit mindestens einem Werkstück des Werkstückmagazins ausgebildeten mehrachsigen Werkstückmanipulator, der einen Werkstückwechsler, einen vom Werkstückmagazin ausgehenden und in das Bearbeitungszentrum verlaufenden geraden Tragarm mit einer ersten Linearführung, die eine erste Bewegungsachse am Werkstückmanipulator ausbildet, und einen an der ersten Linearführung beweglich gelagerten Wagen zum Bewegen des Werkstückwechslers aufweist.

Flexible Fertigungszellen mit einem Bearbeitungszentrum, mit einem Werkstückmagazin und mit einem Werkstückmanipulator zum Handling der Werkstücke zwischen Bearbeitungszentrum und Werkstückmagazin sind aus dem Stand der Technik bekannt (EP2033725A1). Dieser Werkstückmanipulator weist eine Portalform auf und ist dazu ausgebildet, die Spanneinrichtung des Bearbeitungszentrums mit Werkstücken zu be- und entladen. Hierzu kann ein Werkstückwechsler auf einem Tragarm, der außen und oberhalb des Bearbeitungszentrums frei auskragend verläuft, zwischen Werkstückmagazin und Spanneinrichtung verfahren werden. Aufgrund solch einer Portal-Ausführung ist eine vergleichsweise kollisionsfreie Beschickung des Bearbeitungszentrums mit Werkstücken möglich. Nachteilig bedarf diese Ausführung des Werkstückmanipulators einen vergleichsweise hohen Platzbedarf, was diese Lösung für kleinere flexible Fertigungszellen ausschließt. Zudem ist für das Beladen und Entladen der Werkstücke der Arbeitsraum des Bearbeitungszentrums ständig offen, was eine Gefährdung eines Bedienpersonals nicht ausschließen kann.

Die Erfindung hat sich daher ausgehend vom Eingangs geschilderten Stand der Technik die Aufgabe gestellt, die Konstruktion einer flexiblen Fertigungszelle zu vereinfachen, dennoch aber damit Kollisionsfreiheit und hohe Bedienungssicherheit sicherstellen zu können.

Die Erfindung löst die gestellte Aufgabe durch die Merkmale des Anspruchs 1.

Ist der Tragarm am Gestellrahmen des Werkstückmagazins befestigt und verläuft der Tragarm im Bearbeitungszentrum frei auskragend, kann dies für eine zueinander kompakte Anordnung von Bearbeitungszentrum, Werkstückmagazin und Werkstückmanipulator führen, ohne -wie aus dem Stand der Technik bekannt- eine Portalkonstruktion am Werkstückmanipulator vorsehen zu müssen. Zudem kann der Verlauf des Tragarms im Bearbeitungszentrum vermeiden, dass der Arbeitsraum für Bedienpersonal zugänglich wird, was zu einer vergleichsweise hohen Bedienungssicherheit führen kann. Erfindungsgemäß kann daher die flexible Fertigungszelle mit einer vereinfachten Konstruktion hohe Kollisionsfreiheit und Bedienungssicherheit sicherstellen.

Vorzugsweise ist der Tragarm als Kragbalken ausgebildet, was die Konstruktion weiter vereinfachen kann.

Die Handhabung von Werkstücken kann weiter erleichtert werden, wenn der Werkstückmanipulator eine zweite Linearführung oder ein Drehlager aufweist, die bzw. das eine zweite Bewegungsachse am Werkstückmanipulator zum Bewegen des Werkstückwechslers ausbildet und geneigt, insbesondere normal, zur ersten Bewegungsachse verläuft.

Vorzugsweise ist der Werkstückwechsler an der zweiten Linearführung oder am Drehlage beweglich gelagert ist.

Weist zudem der Wagen an dem, dem Bearbeitungszentrum zugewandten Ende die zweite Linearführung auf, kann dies die Führung des Werkstücks zur und von der Spanneinrichtung erleichtern und sohin der Kollisionsfreiheit im Arbeitsraum förderlich sein.

Vorzugsweise verlaufen die erste Linearführung in horizontaler X-Richtung und/oder die zweite Linearführung in vertikaler Z-Richtung, was die Konstruktion weiter vereinfachen kann.

Weist der Werkstückwechsler mindestens einen Greifer auf, der um eine Drehachse drehbar gelagert ist, kann damit besonders flexibel jegliche Werkstückform der Spanneinrichtung zugeführt und entnommen werden.

Vorzugsweise verläuft die Drehachse in Y-Richtung normal zur X- und Z-Richtung, was eine hohe Beweglichkeit des Werkstückwechslers sicherstellen kann.

Insbesondere dann, wenn der Werkstückwechsler zwei um dieselbe Drehachse drehbar gelagert Greifer aufweist.

Liegen sich die beiden Greifer diametral gegenüber, kann dies ein Handling von Werkstücken an der flexiblen Fertigungszelle weiter erleichtern.

Indem der Tragarm im Bearbeitungszentrum verläuft, kann dieser neben seiner tragenden Funktion für die Führung des Werkstückwechslers auch zur Absaugung, beispielsweise Luft- und/oder Ölnebel- und/oder Feuchtigkeitsabsaugung, funktionalisiert werden. Das Bearbeitungszentrum weist nämlich eine Absaugung mit einer Saugleitung auf - die der Tragarm aufweisen kann. Der Tragarm kann aber auch die Saugleitung ausbilden.

Insbesondere kann der Tragarm die Saugleitung durch dessen geschlossenen Hohlprofilform begrenzen und damit ausbilden, wodurch zusätzliche Führungselemente, wie beispielsweise Rohre etc., sich erübrigen können.

Vorzugsweise weist der Tragarm an seinem, dem Bearbeitungszentrum zugewandten Ende, eine Öffnung für die Saugleitung auf, um damit auch vergleichsweise tief im Arbeitsraum bzw. im Bearbeitungszentrum absaugen zu können. Beispielsweise kann damit Luft- und/oder Ölnebel- und/oder Feuchtigkeit abgesaugt werden.

In den Figuren ist beispielsweise der Erfindungsgegenstand anhand einer Ausführungsvariante näher dargestellt. Es zeigen
- Fig. 1: eine perspektivische Seitenansicht auf eine flexible Fertigungszelle mit einem Werkstückmanipulator 4 positioniert an einem Werkstückmagazin der Fertigungszelle,
- Fig. 2: eine perspektivische Seitenansicht auf die flexible Fertigungszelle nach Fig. 1 mit dem Werkstückmanipulator 4 positioniert an einem Bearbeitungszentrum der Fertigungszelle und
- Fig. 3: eine vergrößerte Ansicht auf einen Werkstückwechsler des Werkstückmanipulators nach den Figuren 1 und 2.

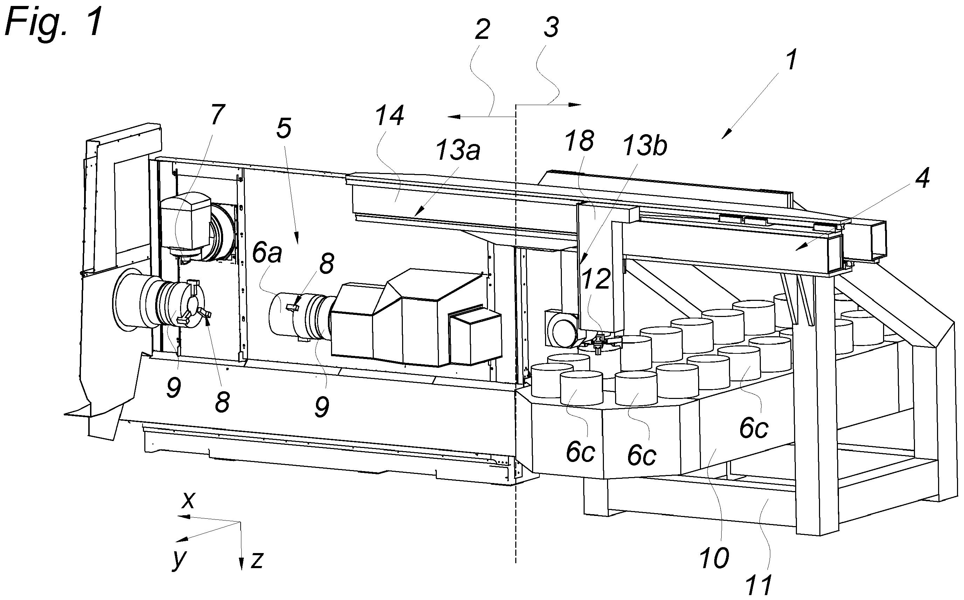

Nach Fig. 1 wird eine flexible Fertigungszelle 1 mit einem Bearbeitungszentrum 2, mit einem Werkstückmagazin 3 und mit einem mehrachsigen Werkstückmanipulator 4 gezeigt.

Das Bearbeitungszentrum 2 weist einen Arbeitsraum 5 auf, in dem ein Werkstück 6a mit Werkzeugen 7 des Bearbeitungszentrums 2 bearbeitet wird. Das Werkstück 6a wird von einer Spanneinrichtung 8 des Bearbeitungszentrums 2 gespannt. Die Spanneinrichtung 8 ist Teil eines Spannfutters 9 des Bearbeitungszentrums 2. Das Bearbeitungszentrum 2 ist als Werkzeugmaschine zur Komplettbearbeitung ausgeführt.

Das Werkstückmagazin 3 weist einen Rundtakttisch 10 auf, auf dem verschiedenste Werkstücke 6c gelagert sind. Diese Werkstücke 6c sind zum Beladen des Bearbeitungszentrums 2 vorgesehen oder sind bereits von diesem fertig bearbeitet. Der Rundtakttisch 10 steht auf einem Gestellrahmen 11 des Werkstückmagazins 3.

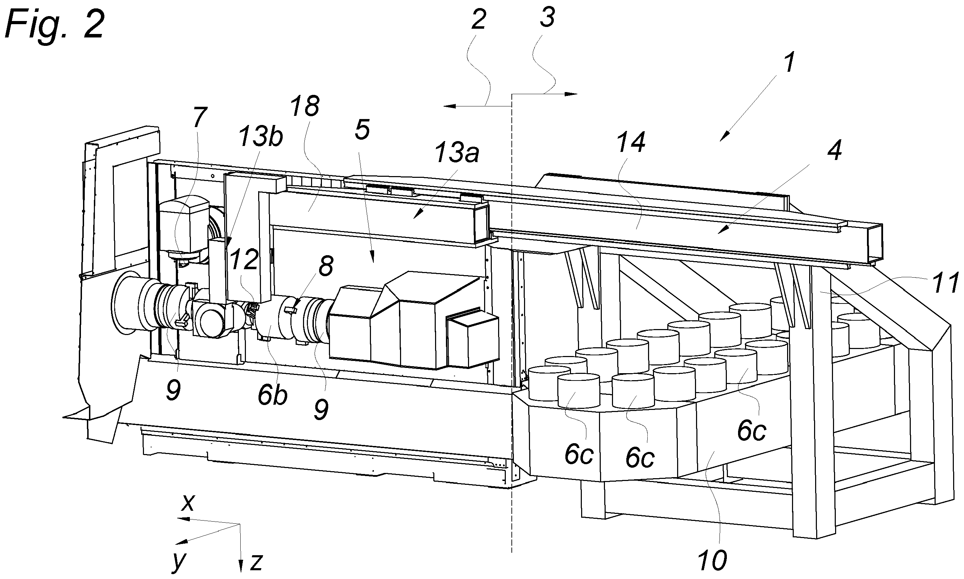

Zum Be- und/oder Entladen der Spanneinrichtung 8 mit Werkstücken 6a, 6b, 6c aus dem Werkstückmagazin 3 ist ein Werkstückmanipulator 4 vorgesehen. Der mehrachsige Werkstückmanipulator 4 weist hierzu einen Werkstückwechsler 12 auf, der das Werkstück 6b hält, wie in Fig. 2 zu erkennen. Der Werkstückwechsler 12 ist entlang einer horizontalen ersten Linearführung 13a, die eine erste Bewegungsachse am Werkstückmanipulator 4 ausbildet, und entlang einer vertikalen zweiten Linearführung 13b, die eine zweite Bewegungsachse am Werkstückmanipulator 4 ausbildet, beweglich.

Für die erste Linearführung 13a weist der Werkstückmanipulator 4 einen vom Werkstückmagazin 3 ausgehenden und in das Bearbeitungszentrum 2 verlaufenden geraden Tragarm 14 auf. An dieser ersten Linearführung 13a ist ein Wagen 18 verschiebbar gelagert.

Dieser Wagen 18 weist die zweite Linearführung 13b auf, an der der Werkstückwechsler 12 beweglich gelagert ist. Anstatt der zweiten Linearführung 13b ist auch eine Drehlage vorstellbar, um eine zweite Bewegungsachse für den Werkstückwechsler 12 zu schaffen.

Für eine hohe Standfestigkeit des Werkstückmanipulators 4 ist der Tragarm 14 am Gestellrahmen 11 des Werkstückmagazins 3 befestigt. Zudem verläuft der Tragarm 14 im Bearbeitungszentrum 2 frei auskragend, wie in Fig. 1, 2 und 3 erkannt werden kann. Dadurch kann Kollisionsfreiheit und hohe Bedienungssicherheit sicherstellt werden, da das Bearbeitungszentrum 2 nicht offen ausgeführt werden muss bzw. vom Bedienpersonal nicht geöffnet werden muss. Zudem findet durch das freie Auskragen keine Schwingungsübertragung von Werkstückmanipulator 4 bzw. Werkstückmagazin 3 auf Bearbeitungsmaschine 2 statt. Außerdem ist dieser Werkstückmanipulator 4 vergleichsweise einfach nachrüstbar.

Der Tragarm 14 ist als Kragbalken ausgebildet und weist -konstruktiv vereinfacht gelöst- an dem, dem Bearbeitungszentrum 2 zugewandten Ende die zweite Linearführung 13b auf. Wie bereits erwähnt, verlaufen die erste Linearführung 13a in horizontaler X-Richtung und die zweite Linearführung 13b in vertikaler Z-Richtung, was auch der Fig. 1 entnommen werden kann.

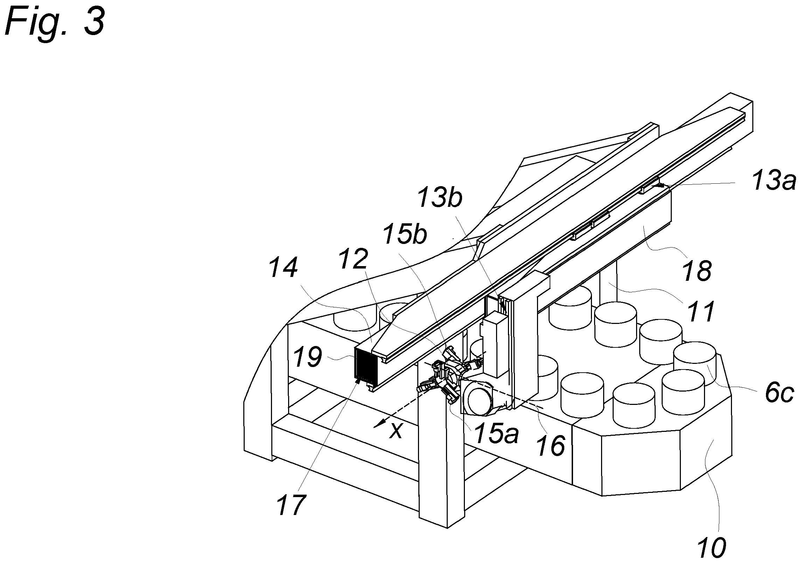

Der Werkstückwechsler 12 hält das Werkstück 6a mit einem ersten Greifer 15a, der um eine Drehachse 16 drehbar gelagert ist, wie in Fig. 3 zu erkennen. Dies ermöglicht eine hohe Beweglichkeit des Werkstückwechslers 12, damit verschiedenste Werkstücke 6a, 6b, 6c zu greifen. Diese Drehachse 16 verläuft in Y-Richtung normal zur X- und Z-Richtung.

Wie der Fig. 3 zu entnehmen, weist der Werkstückwechsler 12 zwei um die gemeinsame Drehachse 16 drehbar gelagerte Greifer 15a, 15b auf. Damit können zwei Werkstücke 6b vom Werkstückwechsler 12 gleichzeitig aufgenommen werden. Der Werkstückwechsler 12 kann daher in einem Arbeitsschritt die Spanneinrichtung 8 mit einem bearbeiteten Werkstück 6a entladen und dann mit einem zu bearbeitenden Werkstück 6b beladen.

Kollisionsfreiheit im Arbeitsraum 5 wird dadurch garantiert, dass die beiden Greifer 15a, 15b bei einer zentrischen Drehachse 16 diametral gegenüberliegen.

Der Werkstückmanipulator 4 weist aber auch eine Funktionalität der Absaugung im Arbeitsraum 5 auf. Diese bildet eine Saugleitung 17 der Absaugung abschnittsweise durch seinen Tragarm 14 aus - hierzu weist der Tragarm 14 eine geschlossene Hohlprofilform auf. Durch dessen Hohlraum wird aus dem Arbeitsraum 5 Luft und/oder Ölnebel und/oder Feuchtigkeit abgesaugt. Wie in Fig. 3 zu erkennen, ist die Öffnung 19 der Saugleitung 17 an dem Bearbeitungszentrum 2 zugewandten Ende des Tragarms 14 vorgesehen.

## Patentansprüche

1. Flexible Fertigungszelle mit einem Bearbeitungszentrum (2), das einen Arbeitsraum (5) zur Bearbeitung eines Werkstücks (6a, 6b, 6c) und eine Spanneinrichtung (8) zum Spannen des Werkstücks (6a) aufweist, mit einem zur Aufnahme mehrerer Werkstücke (6c) ausgebildeten Werkstückmagazin (3), das einen Gestellrahmen (11) aufweist, und mit einem zum Be- und/oder Entladen der Spanneinrichtung (8) mit mindestens einem Werkstück (6b) des Werkstückmagazins (3) ausgebildeten mehrachsigen Werkstückmanipulator (4), der einen Werkstückwechsler (12), einen vom Werkstückmagazin (3) ausgehenden und in das Bearbeitungszentrum (2) verlaufenden geraden Tragarm (14) mit einer ersten Linearführung (13a), die eine erste Bewegungsachse am Werkstückmanipulator (4) ausbildet, und einen an der ersten Linearführung (13a) beweglich gelagerten Wagen (18) zum Bewegen des Werkstückwechslers (12) entlang der ersten Bewegungsachse aufweist, **dadurch gekennzeichnet, dass** der Tragarm (14) am Gestellrahmen (11) des Werkstückmagazins (3) befestigt ist und im Bearbeitungszentrum (2) frei auskragend verläuft.

2. Flexible Fertigungszelle nach Anspruch 1, **dadurch gekennzeichnet, dass** der Tragarm (14) als Kragbalken ausgebildet ist.

3. Flexible Fertigungszelle nach Anspruch 1 oder 2, **dadurch gekennzeichnet, dass** der Werkstückmanipulator (4) eine zweite Linearführung (13b) oder ein Drehlager aufweist, die bzw. das eine zweite Bewegungsachse am Werkstückmanipulator (4) zum Bewegen des Werkstückwechslers (12) ausbildet und geneigt, insbesondere normal, zur ersten Bewegungsachse verläuft.

4. Flexible Fertigungszelle nach Anspruch 3, **dadurch gekennzeichnet, dass** der Werkstückwechsler (12) an der zweiten Linearführung (13b) oder am Drehlage (13b) beweglich gelagert ist.

5. Flexible Fertigungszelle nach Anspruch 3 oder 4, **dadurch gekennzeichnet, dass** der Wagen (18) an dem, dem Bearbeitungszentrum (2) zugewandten Ende die zweite Linearführung (13b) aufweist.

6. Flexible Fertigungszelle nach einem der Ansprüche 1 bis 5, **dadurch gekennzeichnet, dass** die erste Linearführung (13a) in horizontaler X-Richtung und/oder die zweite Linearführung (13b) in vertikaler Z-Richtung verlaufen.

7. Flexible Fertigungszelle nach einem der Ansprüche 1 bis 6, **dadurch gekennzeichnet, dass** der Werkstückwechsler (12) mindestens einen Greifer (15a, 15b) aufweist, der um eine Drehachse (16) drehbar gelagert ist.

8. Flexible Fertigungszelle nach Anspruch 7, **dadurch gekennzeichnet, dass** die Drehachse (16) in Y-Richtung normal zur X- und Z-Richtung verläuft.

9. Flexible Fertigungszelle nach Anspruch 7 oder 8, **dadurch gekennzeichnet, dass** der Werkstückwechsler (12) zwei um dieselbe Drehachse (16) drehbar gelagerte Greifer (15a, 15b) aufweist.

10. Flexible Fertigungszelle nach Anspruch 9, **dadurch gekennzeichnet, dass** sich die beiden Greifer (15a, 15b) diametral gegenüberliegen.

11. Flexible Fertigungszelle nach einem der Ansprüche 1 bis 10, **dadurch gekennzeichnet, dass** das Bearbeitungszentrum (2) eine Absaugung mit einer Saugleitung (17) aufweist, wobei der Tragarm (14) die Saugleitung (17) aufweist oder ausbildet.

12. Flexible Fertigungszelle nach Anspruch 11, **dadurch gekennzeichnet, dass** der Tragarm (14) die Saugleitung (17) durch dessen, vorzugsweise geschlossene, Hohlprofilform begrenzt und damit ausbildet.

13. Flexible Fertigungszelle nach Anspruch 11 oder 12, **dadurch gekennzeichnet, dass** der Tragarm (14) an seinem dem Bearbeitungszentrum (2) zugewandten Ende eine Öffnung (19) für die Saugleitung (17) aufweist.
